# EUROPÄISCHE PATENTANMELDUNG

(11) **EP 4 218 377 A1**
(43) Veröffentlichungstag der Anmeldung: **02.08.2023**
(21) Anmeldenummer: 22207231.6
(22) Anmeldetag: 14.11.2022
(51) Int. Cl.: A01B 59/00, A01B 59/04

(54) **KUPPLUNGSVORRICHTUNG FÜR EIN LANDWIRTSCHAFTLICHES FAHRZEUGGESPANN**

(30) Priorität: 11.01.2022 DE 102022100463
(71) Anmelder: CLAAS E-Systems GmbH, 49201 Dissen (DE)
(72) Erfinder: Heydekorn, Jens, 33428 Harsewinkel (DE)
(74) Vertreter: CLAAS Gruppe

(57) **Zusammenfassung**

Die vorliegende Erfindung betrifft eine Kupplungsvorrichtung (1) für ein landwirtschaftliches Fahrzeuggespann (2), ein landwirtschaftliches Fahrzeuggespann (2), eine landwirtschaftliche Arbeitsmaschine (27), ein Anbaugerät (28) und ein Verfahren zum Betrieb des landwirtschaftlichen Fahrzeuggespanns (2).

Die vorliegende Erfindung beruht auf dem allgemeinen Gedanken, dass in einem Anschlusszustand, in dem wenigstens ein Schlauchkuppler (9, 10, 11, 12, 13, 14) an einer Kupplungsdose (3, 4, 5, 6, 7, 8) angeschlossen ist, eine kuppeldosenseitige elektrische Leitung (15, 16, 17, 18, 19, 20) der Kupplungsdose (3, 4, 5, 6, 7, 8), an dem der Schlauchkuppler (9, 10, 11, 12, 13, 14) angeschossen ist, über die Kupplungsdose (3, 4, 5, 6, 7, 8) und den Schlauchkuppler (9, 10, 11, 12, 13, 14) elektrisch leitend mit einer schlauchkupplerseitigen elektrischen Leitung (21, 22, 23, 24, 25, 26) des Schlauchkupplers (9, 10, 11, 12, 13, 14) verbunden ist.

## Beschreibung

Die vorliegende Erfindung betrifft eine Kupplungsvorrichtung für ein landwirtschaftliches Fahrzeuggespann, ein landwirtschaftliches Fahrzeuggespann, eine landwirtschaftliche Arbeitsmaschine, ein Anbaugerät und ein Verfahren zum Betrieb des landwirtschaftlichen Fahrzeuggespanns.

Die DE 10 2014 104 283 A1 zeigt beispielsweise eine landwirtschaftliche Arbeitsmaschine mit einer auf einem Fahrerstand angeordneten Gruppe von Bedienelementen, die mehreren im Heck- und/oder Frontbereich und/oder Anbaubereich der Arbeitsmaschine vorgesehenen hydraulischen oder elektrischen Kuppelelementen zugeordnet sind, wobei die Kuppelelemente mit Anschlussleitungen von an die Arbeitsmaschine angebauten Arbeitsgeräten verbindbar sind.

Die CA 2 241 523 A1 beschreibt ein System und Verfahren zur Zuordnung von Hydraulikauslässen an einem Traktor zu den entsprechenden Schläuchen an einem Traktorgerät. Das System umfasst ein Identifizierungsschild, das eine schematische Darstellung der Hydraulikauslassplatte eines Traktors ist, und kodierte Etiketten zur Verwendung mit dem Identifizierungsschild und den Schläuchen des Traktorgeräts.

Die EP 3 713 387 A1 beschreibt eine Führung eines Bedieners beim Anschluss eines Gerätes, insbesondere von Geräteanschlussschläuchen an einem landwirtschaftlichen Fahrzeug.

Die EP 2 018 981 A1 betrifft eine Anordnung mit mehreren Hydraulikschläuchen, über die sich hydraulische Arbeitsfunktionen einer Landmaschine steuern lassen, wobei an jedem der Hydraulikschläuche ein individueller RFID-Transponder angebracht ist. Die RFID-Transponder befinden sich in der Nähe zugehöriger Anschlussenden der Hydraulikschläuche, sodass an traktorseitigen Gegenanschlüssen angebrachte RFID-Reader den jeweiligen RFID-Transponder beim Einstecken der Anschlussenden auslesen können. Auf diese Weise lässt sich eine Zuordnung der Hydraulikleitungen bzw. der über diese steuerbaren Arbeitsfunktionen zu den jeweiligen Gegenanschlüssen herstellen, was es einer zugehörigen Steuerelektronik erlaubt, eine entsprechende Funktionsbelegung der Gegenanschlüsse vorzunehmen.

Da die EP 2 018 981 A1 viele RFID-Transponder und RFID-Reader für den kontaktlosen Datenaustausch erfordert, wurde von der DE 10 2016 206 401 A1 eine bezüglich der kontaktlosen Datenübertragung vereinfachte Anordnung zur Ermittlung einer Steckposition eines Schlauchkupplers an einem Anschlussfeld angeführt.

Die DE 10 2016 206 401 A1 beschreibt eine Anordnung umfassend ein Anschlussfeld mit einer Vielzahl von Kupplungsdosen zum Anschluss zugehöriger Schlauchkuppler, wenigstens einen daran anschließbaren Schlauchkuppler, eine Datenschnittstelle sowie eine Auswerteeinheit. Ferner weist der wenigstens eine Schlauchkuppler eine Empfangsspule sowie jede der Kupplungsdosen eine Sendespule auf, wobei beim Anschließen des wenigstens einen Schlauchkupplers an eine der Kupplungsdosen ein an der Sendespule abrufbarer individueller Identifikator mittels der Empfangsspule ausgelesen und über die mit der Empfangsspule kommunizierende Datenschnittstelle an die Auswerteeinheit zur Ermittlung der Steckposition des wenigstens einen Schlauchkupplers übertragen wird.

Der vorliegenden Erfindung liegt die Aufgabe zugrunde, eine verbesserte oder zumindest eine alternative Ausführungsform einer Kupplungsvorrichtung für ein landwirtschaftliches Fahrzeuggespann, eines landwirtschaftlichen Fahrzeuggespanns, einer landwirtschaftlichen Arbeitsmaschine, eines Anbaugerät und/oder eines Verfahren zum Betrieb des landwirtschaftlichen Fahrzeuggespanns anzugeben, wobei insbesondere eine Verringerung von Herstellungskosten und/oder eine vereinfachte Ausgestaltung bereitgestellt wird.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass in einem Anschlusszustand, in dem wenigstens ein Schlauchkuppler an einer Kupplungsdose angeschlossen ist, eine kuppeldosenseitige elektrische Leitung der Kupplungsdose, an dem der Schlauchkuppler angeschossen ist, über die Kupplungsdose und den Schlauchkuppler elektrisch leitend mit einer schlauchkupplerseitigen elektrischen Leitung des Schlauchkupplers verbunden ist. Hierdurch wird eine drahtgebundene Datenübertragung, insbesondere von Identifikatoren, ermöglicht, die im Vergleich zur drahtlosen Datenübertragung, insbesondere von Identifikatoren, eine verbesserte oder zumindest eine alternative Ausführungsform, insbesondere eine kostengünstigere Ausführungsform, ausbildet.

Die erfindungsgemäße Kupplungsvorrichtung für ein landwirtschaftliches Fahrzeuggespann umfasst mehrere Kupplungsdosen zum Anschluss eines zugehörigen Schlauchkupplers und wenigstens einen Schlauchkuppler, der an einer der Kupplungsdosen anschließbar ist. Mit anderen Worten ausgedrückt, kann ein solcher Schlauchkuppler an jeder dazugehörigen Kupplungsdose angeschlossen, insbesondere lösbar, werden. Es kann vorgesehen sein, dass mehrere Schlauchkuppler, insbesondere genauso viele Schlauchkuppler wie Kupplungsdosen, vorhanden sind. Der Schlauchkuppler kann als hydraulischer Anschluss und/oder pneumatischer Anschluss ausgebildet sein. Die Kupplungsdosen können dementsprechend als Hydraulikbuchsen und/oder Pneumatikbuchsen zur Aufnahme des Schlauchkupplers ausgebildet sein. Es kann vorgesehen sein, dass die Kupplungsvorrichtung ein Anschlussfeld mit den mehreren Kupplungsdosen zum Anschluss zugehöriger Schlauchkuppler ausbildet.

Die Kupplungsdosen sind jeweils, insbesondere teilweise oder vollständig, elektrisch leitend ausgebildet. Der Schlauchkuppler ist jeweils, insbesondere teilweise oder vollständig, elektrisch leitend ausgebildet. Die Kupplungsdosen und/oder die Schlauchkuppler können jeweils, insbesondere teilweise oder vollständig, aus einem elektrisch leitfähigen Material, insbesondere metallischen Material, ausgebildet sein. Die Kupplungsdosen können, insbesondere auf dem Anschlussfeld, derart angeordnet und/oder ausgebildet sein, dass sie voneinander elektrisch isoliert sind, sodass keine elektrische Verbindung zwischen den Kupplungsdosen entsteht.

Jede der Kupplungsdosen ist jeweils mit einer kuppeldosenseitigen elektrischen Leitung elektrisch leitend verbunden. Somit kann die Anzahl der Kupplungsdosen identisch zur Anzahl der kuppeldosenseitigen elektrischen Leitungen sein. Die kuppeldosenseitigen elektrischen Leitungen können jeweils, insbesondere teilweise oder vollständig, aus einem elektrisch leitfähigen Material, insbesondere metallischen Material, ausgebildet sein. Unter "kuppeldosenseitig" kann zu verstehen sein, dass es eine elektrische Leitung einer landwirtschaftlichen Arbeitsmaschine des Fahrzeuggespannes ist. Der Schlauchkuppler ist mit einer schlauchkupplerseitigen elektrischen Leitung elektrisch leitend verbunden. Bei mehreren Schlauchkupplern kann vorgesehen sein, dass jeder der Schlauchkuppler jeweils mit einer schlauchkupplerseitigen elektrischen Leitung elektrisch leitend verbunden ist. Die schlauchkupplerseitigen elektrischen Leitungen können jeweils, insbesondere teilweise oder vollständig, aus einem elektrisch leitfähigen Material, insbesondere metallischen Material, ausgebildet sein. Unter "schlauchkupplerseitig" kann zu verstehen sein, dass es eine elektrische Leitung eines Anbaugerätes des Fahrzeuggespannes oder zum Anschluss eines Anbaugerätes des Fahrzeuggespannes ist.

Die kuppeldosenseitigen elektrischen Leitungen können jeweils beabstandet von der schlauchkupplerseitigen elektrischen Leitung, insbesondere von den schlauchkupplerseitigen elektrischen Leitungen, angeordnet sein. Mit anderen Worten ausgedrückt, können die kuppeldosenseitigen elektrischen Leitungen berührungsfrei von der schlauchkupplerseitigen elektrischen Leitung, insbesondere von den schlauchkupplerseitigen elektrischen Leitungen, angeordnet sein.

In einem Anschlusszustand, in dem der wenigstens eine Schlauchkuppler an einer der Kupplungsdosen angeschlossen ist, ist die kuppeldosenseitige elektrische Leitung derjenigen Kupplungsdose, an dem der Schlauchkuppler angeschossen ist, über die Kupplungsdose und den Schlauchkuppler elektrisch leitend mit der schlauchkupplerseitigen elektrischen Leitung des Schlauchkupplers verbunden. Mit anderen Worten ausgedrückt, sind im Anschlusszustand die Kupplungsdose, an dem der Schlauchkuppler angeschossen ist, und der angeschossene Schlauchkuppler elektrisch leitend miteinander verbunden. Bei mehreren Schlauchkupplern können somit beispielsweise mehrere kuppeldosenseitige elektrische Leitungen mit mehreren schlauchkupplerseitigen elektrischen Leitungen elektrisch leitend verbunden werden, wobei stets eine schlauchkupplerseitige elektrische Leitung mit lediglich einer kuppeldosenseitigen elektrischen Leitung elektrisch leitend verbunden werden kann.

Eine solche elektrisch leitende Verbindung zwischen einer kuppeldosenseitigen elektrischen Leitung und einer schlauchkupplerseitigen elektrischen Leitung ermöglicht beispielsweise eine drahtgebundene Datenübertragung, insbesondere von Identifikatoren, wobei im Vergleich zur drahtlosen Datenübertragung eine verbesserte oder zumindest eine alternative Ausführungsform, insbesondere eine kostengünstigere Ausführungsform, erzielt wird.

Ferner betrifft die Erfindung ein landwirtschaftliches Fahrzeuggespann mit einer landwirtschaftlichen Arbeitsmaschine, insbesondere einem Traktor, und mit einem Anbaugerät, insbesondere einer Ballenpresse, und mit wenigstens einer erfindungsgemäßen Kupplungsvorrichtung. Bezüglich der Eigenschaften einer solchen Kupplungsvorrichtung wird auf die vorrangehenden und die nachfolgenden Aussagen verwiesen. Mittels der Kupplungsvorrichtung kann neben einer hydraulischen und/oder pneumatischen Versorgung des Anbaugerätes auch eine drahtgebundene Datenübertragung, insbesondere von Identifikatoren, zwischen der landwirtschaftlichen Arbeitsmaschine und dem Anbaugerät ausgebildet werden. Hierdurch wird beispielsweise auch das Anschließen eines Anbaugerätes an eine landwirtschaftliche Arbeitsmaschine für einen Nutzer des landwirtschaftlichen Fahrzeuggespanns vereinfacht. Die landwirtschaftliche Arbeitsmaschine kann mehrere im Heckbereich und/oder Frontbereich und/oder Anbaubereich der Arbeitsmaschine ausgebildete Kupplungsvorrichtungen aufweisen, wobei diese Kupplungsvorrichtungen mit Schläuchen von an die Arbeitsmaschine angebauten Arbeitsgeräten verbindbar sind.

Bei einer vorteilhaften Weiterbildung der erfindungsgemäßen Lösung ist vorgesehen, dass die landwirtschaftliche Arbeitsmaschine eine Arbeitsmaschinen-Steuervorrichtung zur Steuerung und/oder Regelung der landwirtschaftlichen Arbeitsmaschine aufweist, wobei das Anbaugerät eine Anbaugerät-Steuervorrichtung zur Steuerung und/oder Regelung des Anbaugeräts aufweist. Die Arbeitsmaschinen-Steuervorrichtung ist elektrisch leitend mit den kuppeldosenseitigen elektrischen Leitungen, insbesondere mit all diesen Leitungen, verbunden. Die Anbaugerät-Steuervorrichtung ist elektrisch leitend mit wenigstens einer schlauchkupplerseitigen elektrischen Leitung, insbesondere mit all diesen Leitungen, verbunden. Die Arbeitsmaschinen-Steuervorrichtung kann innerhalb der landwirtschaftlichen Arbeitsmaschine angeordnet sein. Die Anbaugerät-Steuervorrichtung kann innerhalb des Anbaugerätes angeordnet sein. Die wenigstens eine Kupplungsvorrichtung kann daher wenigstens eine elektrisch leitende Verbindung zwischen der Arbeitsmaschinen-Steuervorrichtung und der Anbaugerät-Steuervorrichtung ausbilden.

Vorzugsweise kann sich der Begriff "Steuervorrichtung", insbesondere Arbeitsmaschinen-Steuervorrichtung und/oder Anbaugerät-Steuervorrichtung, jeweils auf eine Elektronikschaltung (z. B. mit Mikroprozessor(en) und Datenspeicher(n)) und/oder mechanische Steuerung beziehen, die je nach Ausbildung Steuerungsaufgaben und/oder Regelungsaufgaben übernehmen und/oder ausführen kann. Auch wenn hierin der Begriff "Steuern" verwendet wird, kann damit gleichsam zweckmäßig auch "Regeln" bzw. "Steuern mit Rücckopplung" umfasst sein.

Bei einer vorteilhaften Weiterbildung der erfindungsgemäßen Lösung ist vorgesehen, dass in einem Anschlusszustand, in dem der wenigstens eine Schlauchkuppler an einer der Kupplungsdosen angeschlossen ist, die Arbeitsmaschinen-Steuervorrichtung und die Anbaugerät-Steuervorrichtung mittels der wenigstens einen Kupplungsvorrichtung kommunizierend verbunden sind.

Unter einer kommunizierenden Verbindung kann hier zu verstehen sein, dass zwischen zwei miteinander kommunizierend verbundenen Komponenten, insbesondere der Arbeitsmaschinen-Steuervorrichtung und der Anbaugerät-Steuervorrichtung, eine Datenverbindung, insbesondere eine bidirektionale oder unidirektionale Datenverbindung, ausgebildet ist, mit der elektrische Signale, insbesondere Steuersignale und/oder Regelsignale und/oder Messsignale, in analoger Form und/oder digitaler Form übertragbar sind. Diese kommunizierende Verbindung kann ein Bussystem, insbesondere ein Eindraht-Bussystem, ausbilden.

Bei einer vorteilhaften Weiterbildung der erfindungsgemäßen Lösung ist vorgesehen, dass zwischen der Arbeitsmaschinen-Steuervorrichtung und der Anbaugerät-Steuervorrichtung mittels der wenigstens einen Kupplungsvorrichtung eine Datenverbindung, insbesondere eine bidirektionale oder eine unidirektionale Datenverbindung, ausgebildet ist.

Bei einer vorteilhaften Weiterbildung der erfindungsgemäßen Lösung ist vorgesehen, dass mittels der Datenverbindung über die wenigstens eine Kupplungsvorrichtung, insbesondere in drahtgebundener Weise, elektrische Signale in analoger Form oder digitaler Form zwischen der Arbeitsmaschinen-Steuervorrichtung und der Anbaugerät-Steuervorrichtung übertragbar sind.

Bei einer vorteilhaften Weiterbildung der erfindungsgemäßen Lösung ist vorgesehen, dass wenigstens ein Schlauch, insbesondere ein Hydraulikschlauch und/oder ein Pneumatikschlauch, ausgebildet ist, der mit dem wenigstens einem Schlauchkuppler, insbesondere wenigstens einem Schlauchkuppler der Kupplungsvorrichtung, verbunden ist. Hierbei kann die schlauchkupplerseitige elektrischen Leitung wenigstens teilweise an dem Schlauch und/oder in dem Schlauch angeordnet sein. Es können mehrere Schläuche, insbesondere mehrere Hydraulikschläuche und/oder mehrere Pneumatikschläuche, ausgebildet sein, wobei jeweils eine schlauchkupplerseitige elektrische Leitung wenigstens teilweise jeweils an einem der Schläuche und/oder in einem der Schläuche angeordnet sein kann.

Bei einer vorteilhaften Weiterbildung der erfindungsgemäßen Lösung ist vorgesehen, dass die Arbeitsmaschinen-Steuervorrichtung und/oder die Anbaugerät-Steuervorrichtung zur Ausführung einer Ermittlung einer Steckposition wenigstens eines Schlauchkupplers der Kupplungsvorrichtung ausgebildet und/oder programmiert sind. Hierbei können die Arbeitsmaschinen-Steuervorrichtung und die Anbaugerät-Steuervorrichtung beispielsweise über ein Bussystem, insbesondere über ein Eindraht-Bussystem, auf die Steckposition bezogene Informationen austauschen.

Bei einer vorteilhaften Weiterbildung der erfindungsgemäßen Lösung ist vorgesehen, dass die Arbeitsmaschinen-Steuervorrichtung dazu ausgebildet und/oder programmiert ist, jeder kuppeldosenseitigen elektrischen Leitung der Kupplungsvorrichtung jeweils einen kuppeldosenseitigen Identifikator zuzuordnen, und/oder dass die Anbaugerät-Steuervorrichtung dazu ausgebildet und/oder programmiert ist, jeder schlauchkupplerseitigen elektrischen Leitung der Kupplungsvorrichtung jeweils einen schlauchkupplerseitigen Identifikator zuzuordnen. Bei einem Identifikator, insbesondere kuppeldosenseitigen und/oder schlauchkupplerseitigen Identifikator, kann es sich um Identifikationsdaten, insbesondere übertragbare Identifikationsdaten, und/oder eine aus Identifikationsdaten abgeleitete Größe handeln. Die Identifikationsdaten können Funktionsdaten umfassen.

Bei einer vorteilhaften Weiterbildung der erfindungsgemäßen Lösung ist vorgesehen, dass die Arbeitsmaschinen-Steuervorrichtung und die Anbaugerät-Steuervorrichtung dazu ausgebildet und/oder programmiert sind, nach der Bewirkung eines Anschlusszustandes, in dem der wenigstens eine Schlauchkuppler an einer der Kupplungsdosen angeschlossen ist bzw. wurde, den dazugehörigen kuppeldosenseitigen Identifikator und/oder den dazugehörigen schlauchkupplerseitigen Identifikator untereinander über die wenigstens eine Kupplungsvorrichtung auszutauschen, insbesondere datentechnisch zu übertragen.

Bei einer vorteilhaften Weiterbildung der erfindungsgemäßen Lösung ist vorgesehen, dass die Arbeitsmaschinen-Steuervorrichtung dazu ausgebildet und/oder programmiert ist, basierend auf einem von der Anbaugerät-Steuervorrichtung empfangenen schlauchkupplerseitigen Identifikator zu ermitteln, ob die Steckposition des zum schlauchkupplerseitigen Identifikator dazugehörigen Schlauchkupplers zulässig ist.

Die Arbeitsmaschinen-Steuervorrichtung kann beispielsweise dazu ausgebildet und/oder programmiert sein, die elektrische Spannung und/oder den elektrischen Widerstand und/oder den elektrischen Strom an einer kuppeldosenseitigen elektrischen Leitung, insbesondere an mehreren kuppeldosenseitigen elektrischen Leitungen, zu messen und/oder zu überwachen, sodass die Arbeitsmaschinen-Steuervorrichtung den Moment eines Anschlusses, in dem wenigstens ein Schlauchkuppler an einer der Kupplungsdosen angeschlossen wurde, ermitteln und/oder feststellen kann. Hierfür kann die Arbeitsmaschinen-Steuervorrichtung dazu ausgebildet und/oder programmiert sein, eine elektrische Spannungsänderung, insbesondere einen Spannungsabfall, während eines Anschlusses, in dem wenigstens ein Schlauchkuppler an einer der Kupplungsdosen angeschlossen wurde, zu ermitteln und/oder festzustellen. Die Arbeitsmaschinen-Steuervorrichtung kann dazu ausgebildet und/oder programmiert sein, nach einer Feststellung eines Anschlusses, in dem wenigstens ein Schlauchkuppler an einer der Kupplungsdosen angeschlossen wurde, eine kommunizierende Verbindung, insbesondere eine Datenaustauschverbindung, über die wenigstens eine Kupplungsvorrichtung mit der Anbaugerät-Steuervorrichtung zu initiieren und/oder aufzubauen. Die Arbeitsmaschinen-Steuervorrichtung kann dazu ausgebildet und/oder programmiert sein, nach einer Initiierung und/oder einem Aufbau der kommunizierenden Verbindung ein Signal, insbesondere ein Test-Signal, zu erstellen und an die Anbaugerät-Steuervorrichtung über die kommunizierende Verbindung zu übermitteln. Die Anbaugerät-Steuervorrichtung kann dazu ausgebildet und/oder programmiert sein, das Signal, insbesondere das Test-Signal, der Arbeitsmaschinen-Steuervorrichtung über die kommunizierende Verbindung zu empfangen und hierauf basierend ein Rücksignal, insbesondere ein Test-Rücksignal, zu erstellen und an die Arbeitsmaschinen-Steuervorrichtung über die kommunizierende Verbindung zu übermitteln. Mit dem Signal, insbesondere dem Test-Signal, und dem Rücksignal, insbesondere ein Test-Rücksignal, wird die kommunizierende Verbindung zwischen der Arbeitsmaschinen-Steuervorrichtung und der Anbaugerät-Steuervorrichtung getestet und/oder überprüft. Die Arbeitsmaschinen-Steuervorrichtung kann dazu ausgebildet und/oder programmiert sein, nach dem Empfang des Rücksignals ein Identifizierungs-Anfrage-Signal zu erstellen und an die Anbaugerät-Steuervorrichtung über die kommunizierende Verbindung zu übermitteln. Die Anbaugerät-Steuervorrichtung kann dazu ausgebildet und/oder programmiert sein, das Signal, insbesondere das Identifizierungs-Anfrage-Signal, der Arbeitsmaschinen-Steuervorrichtung, über die kommunizierende Verbindung zu empfangen und hierauf basierend den schlauchkupplerseitigen Identifikator zu ermitteln und an die Arbeitsmaschinen-Steuervorrichtung über die kommunizierende Verbindung zu übermitteln. Die Arbeitsmaschinen-Steuervorrichtung kann basierend auf einem von der Anbaugerät-Steuervorrichtung empfangenen schlauchkupplerseitigen Identifikator ermitteln, ob die Steckposition des zum schlauchkupplerseitigen Identifikator dazugehörigen Schlauchkupplers zulässig ist. Hierfür kann die Arbeitsmaschinen-Steuervorrichtung den empfangenen schlauchkupplerseitigen Identifikator mit dem kuppeldosenseitigen Identifikator, der zur Kupplungsdose gehört, in dem der Schlauchkuppler eingesteckt wurde, vergleichen. Hierdurch kann die Arbeitsmaschinen-Steuervorrichtung ermitteln, ob die Steckposition des zum schlauchkupplerseitigen Identifikator dazugehörigen Schlauchkupplers zulässig ist. Hierfür können die schlauchkupplerseitigen Identifikatoren und die kuppeldosenseitigen Identifikatoren derart ausgebildet sein, dass die Arbeitsmaschinen-Steuervorrichtung die Zulässigkeit der Steckposition mittels des schlauchkupplerseitigen Identifikators und/oder des kuppeldosenseitigen Identifikators ermitteln kann.

Bei einer vorteilhaften Weiterbildung der erfindungsgemäßen Lösung ist vorgesehen, dass die landwirtschaftliche Arbeitsmaschine ein Anzeigemodul zur Anzeige von Informationen für einen Bediener der landwirtschaftliche Arbeitsmaschine aufweist, wobei das Anzeigemodul kommunizierend mit der Arbeitsmaschinen-Steuervorrichtung verbunden ist, wobei die Arbeitsmaschinen-Steuervorrichtung dazu ausgebildet und/oder programmiert ist, eine Fehlermeldung an das Anzeigemodul zu übermitteln, wenn die Steckposition des zum schlauchkupplerseitigen Identifikator dazugehörigen Schlauchkupplers nicht zulässig ist, wobei das Anzeigemodul dazu ausgebildet und/oder programmiert ist, eine von der Arbeitsmaschinen-Steuervorrichtung empfangene Fehlermeldung optisch für den Bediener der landwirtschaftliche Arbeitsmaschine darzustellen. Hierdurch kann ein Bediener beispielsweise auf eine Vertauschung eines Einlaufes und eines Auslaufes eines Kreislaufes hingewiesen werden, sodass der Bediener diese Vertauschung vor dem Betrieb des landwirtschaftlichen Fahrzeuggespanns korrigieren kann. Ferner kann der ein Bediener beispielsweise auf eine nachteilige Überkreuzung mehrerer Kreisläufe hingewiesen werden, sodass der Bediener diese Überkreuzung vor dem Betrieb des landwirtschaftlichen Fahrzeuggespanns korrigieren kann.

Ferner betrifft die Erfindung eine landwirtschaftliche Arbeitsmaschine eines erfindungsgemäßen landwirtschaftlichen Fahrzeuggespanns. Bezüglich der Eigenschaften einer solchen landwirtschaftliche Arbeitsmaschine wird auf die vorrangehenden und die nachfolgenden Aussagen verwiesen.

Ferner betrifft die Erfindung ein Anbaugerät eines erfindungsgemäßen landwirtschaftlichen Fahrzeuggespanns. Bezüglich der Eigenschaften eines solchen Anbaugerätes wird auf die vorrangehenden und die nachfolgenden Aussagen verwiesen.

Ferner betrifft die Erfindung ein Verfahren, insbesondere ein computer-implementiertes Verfahren, zum Betrieb eines erfindungsgemäßen landwirtschaftlichen Fahrzeuggespanns, wobei zwischen der landwirtschaftlichen Arbeitsmaschine, insbesondere der Arbeitsmaschinen-Steuervorrichtung, und dem Anbaugerät, insbesondere der Anbaugerät-Steuervorrichtung, über die wenigstens eine Kupplungsvorrichtung ein Datenaustausch erfolgt. Bezüglich der Eigenschaften eines solchen Verfahrens wird auf die vorrangehenden und die nachfolgenden Aussagen verwiesen.

Die Arbeitsmaschinen-Steuervorrichtung kann beispielsweise die elektrische Spannung und/oder den elektrischen Widerstand und/oder den elektrischen Strom an einer kuppeldosenseitigen elektrischen Leitung, insbesondere mehreren kuppeldosenseitigen elektrischen Leitungen, messen und/oder überwachen, sodass die Arbeitsmaschinen-Steuervorrichtung den Moment eines Anschlusses, in dem wenigstens ein Schlauchkuppler an einer der Kupplungsdosen angeschlossen wurde, ermitteln und/oder feststellen kann. Hierfür kann die Arbeitsmaschinen-Steuervorrichtung eine elektrische Spannungsänderung, insbesondere einen Spannungsabfall, während eines Anschlusses, in dem wenigstens ein Schlauchkuppler an einer der Kupplungsdosen angeschlossen wurde, ermitteln und/oder feststellen. Die Arbeitsmaschinen-Steuervorrichtung kann nach einer Feststellung eines Anschlusses, in dem wenigstens ein Schlauchkuppler an einer der Kupplungsdosen angeschlossen wurde, eine kommunizierende Verbindung, insbesondere eine Datenaustauschverbindung, über die wenigstens eine Kupplungsvorrichtung mit der Anbaugerät-Steuervorrichtung initiieren und/oder aufbauen. Die Arbeitsmaschinen-Steuervorrichtung kann nach einer Initiierung und/oder einem Aufbau der kommunizierenden Verbindung ein Signal, insbesondere ein Test-Signal, erstellen und an die Anbaugerät-Steuervorrichtung über die kommunizierende Verbindung übermitteln. Die Anbaugerät-Steuervorrichtung kann das Signal, insbesondere das Test-Signal, der Arbeitsmaschinen-Steuervorrichtung über die kommunizierende Verbindung empfangen und hierauf basierend ein Rücksignal, insbesondere ein Test-Rücksignal, erstellen und an die Arbeitsmaschinen-Steuervorrichtung über die kommunizierende Verbindung übermitteln. Mit dem Signal, insbesondere dem Test-Signal, und dem Rücksignal, insbesondere ein Test-Rücksignal, wird die kommunizierende Verbindung zwischen der Arbeitsmaschinen-Steuervorrichtung und der Anbaugerät-Steuervorrichtung getestet und/oder überprüft. Die Arbeitsmaschinen-Steuervorrichtung kann nach dem Empfang des Rücksignals ein Identifizierungs-Anfrage-Signal erstellen und an die Anbaugerät-Steuervorrichtung über die kommunizierende Verbindung übermitteln. Die Anbaugerät-Steuervorrichtung kann das Signal, insbesondere das Identifizierungs-Anfrage-Signal, der Arbeitsmaschinen-Steuervorrichtung, über die kommunizierende Verbindung empfangen und hierauf basierend den schlauchkupplerseitigen Identifikator ermitteln und an die Arbeitsmaschinen-Steuervorrichtung über die kommunizierende Verbindung übermitteln. Die Arbeitsmaschinen-Steuervorrichtung kann basierend auf einem von der Anbaugerät-Steuervorrichtung empfangenen schlauchkupplerseitigen Identifikator ermitteln, ob die Steckposition des zum schlauchkupplerseitigen Identifikator dazugehörigen Schlauchkupplers zulässig ist. Hierfür kann die Arbeitsmaschinen-Steuervorrichtung den empfangenen schlauchkupplerseitigen Identifikator mit dem kuppeldosenseitigen Identifikator, der zur Kupplungsdose gehört, in dem der Schlauchkuppler eingesteckt wurde, vergleichen. Hierdurch kann die Arbeitsmaschinen-Steuervorrichtung ermitteln, ob die Steckposition des zum schlauchkupplerseitigen Identifikator dazugehörigen Schlauchkupplers zulässig ist. Hierfür können die schlauchkupplerseitigen Identifikatoren und die kuppeldosenseitigen Identifikatoren derart ausgebildet sein, dass die Arbeitsmaschinen-Steuervorrichtung die Zulässigkeit der Steckposition mittels des schlauchkupplerseitigen Identifikators und/oder des kuppeldosenseitigen Identifikators ermitteln kann.

Der Datenaustausch über die wenigstens eine Kupplungsvorrichtung kann zusätzlich oder alternativ zur Zulässigkeit der Steckposition vorsehen, dass ein weiterer Datenaustausch zwischen der Arbeitsmaschinen-Steuervorrichtung und der Anbaugerät-Steuervorrichtung ausgeführt wird. Bei diesem weiteren Datenaustausch können beispielweise weitere Parameter, insbesondere technische Parameter, zwischen der Arbeitsmaschinen-Steuervorrichtung und der Anbaugerät-Steuervorrichtung ausgetauscht werden. Diese Parameter können beispielsweise beispielweise der Typ und/oder Hersteller der landwirtschaftlichen Arbeitsmaschine und/oder des Anbaugeräts sein. Die Parameter können auch hydraulische Parameter umfassen. Ein hydraulischer Parameter kann die aktuelle und/oder maximale Pumpmenge umfassen. Alternativ oder zusätzlich kann ein hydraulischer Parameter umfassen, ob eine Pumpe aktiv oder nicht aktiv ist. Alternativ oder zusätzlich kann ein hydraulischer Parameter umfassen, ob eine Schwimmstellung vorliegt. Alternativ oder zusätzlich kann ein hydraulischer Parameter einen maximalen, insbesondere maximal zulässigen, Druck umfassen. Solche Parameter und/oder Kennwertabfragen können durch ein eigenes Protokoll definiert werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung nähererläutert, wobei sich gleiche Bezugszeichen auf gleiche oder ähnliche oder funktional gleiche Komponenten beziehen.

Es zeigen, jeweils schematisch,
- Fig. 1: ein landwirtschaftliches Fahrzeuggespann,
- Fig. 2: eine landwirtschaftliche Arbeitsmaschine des landwirtschaftlichen Fahrzeuggespanns, und
- Fig. 3: Steuereinheiten und eine Kupplungsvorrichtung des landwirtschaftlichen Fahrzeuggespanns.

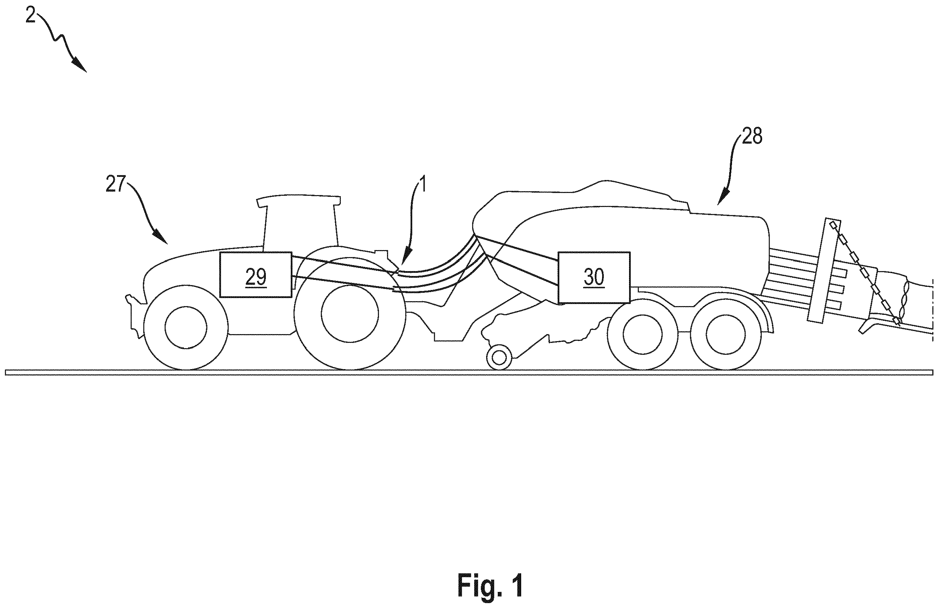

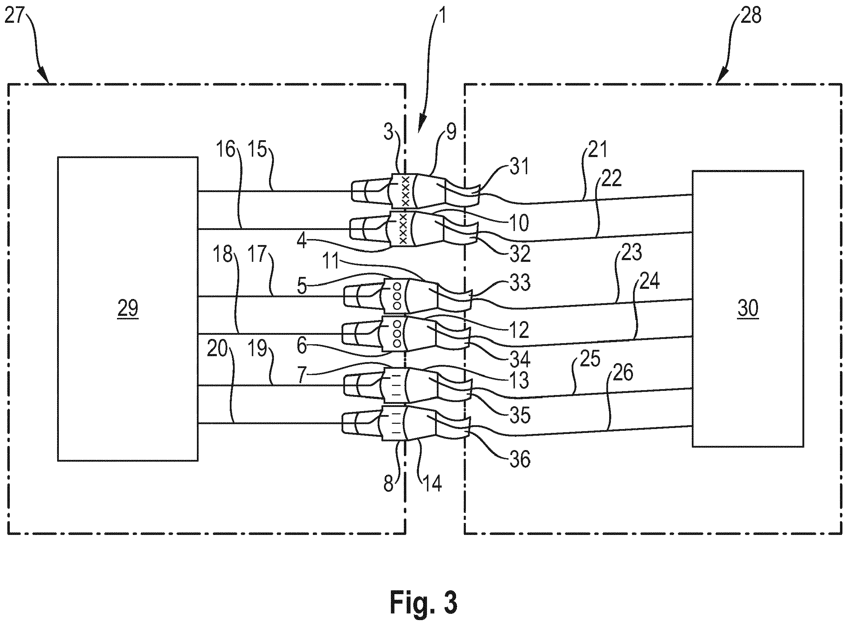

Fig. 1 zeigt ein landwirtschaftliches Fahrzeuggespann 2 mit einer landwirtschaftlichen Arbeitsmaschine 27 und mit einem Anbaugerät 28. Die landwirtschaftliche Arbeitsmaschine 27 kann beispielsweise ein Traktor und das Anbaugerät 28 kann eine Ballenpresse sein. Die landwirtschaftlichen Arbeitsmaschine 27 kann wenigstens eine nicht darstellte Pumpvorrichtung aufweisen, wobei das Anbaugerät 28 wenigstens einen oder mehrere nicht dargestellte Aktuatoren aufweisen kann. Eine solche Pumpvorrichtung kann eine hydraulische Pumpvorrichtung und/oder pneumatische Pumpvorrichtung sein, wobei die Aktuatoren des Anbaugerätes 28 als hydraulische Aktuatoren und/oder pneumatische Aktuatoren ausgebildet sein können. Um wenigstens einen Aktuator des Anbaugerätes 28 mittels der Pumpvorrichtung der landwirtschaftlichen Arbeitsmaschine 27 hydraulisch und/oder pneumatisch zu versorgen, können verschiedene Kreisläufe ausgebildet werden. Über solche Kreisläufe kann ein hydraulischer Druck und/oder pneumatischer Druck steuerbar von Pumpvorrichtung der landwirtschaftlichen Arbeitsmaschine 27 zu Aktuatoren des Anbaugerätes 28 geführt werden. Wie in der Fig. 3 dargestellt, werden pro Kreislauf immer zwei der Schläuche 31, 32, 33, 34, 35 und 36 derart fluidisch verbunden, dass sie den einlaufen und auslaufenden Teil des jeweiligen Kreislaufes ausbilden. Die Schläuche 31 und 32 gehören zu einem Kreislauf. Die Schläuche 31 und 32 gehören zu einem weiteren Kreislauf. Die Schläuche 33 und 34 gehören zu einem weiteren Kreislauf. Die Schläuche 35 und 36 gehören zu einem weiteren Kreislauf. Die Schläuche 31, 32, 33, 34, 35 und 36 sind in den Figuren symbolisch und daher verkürzt dargestellt.

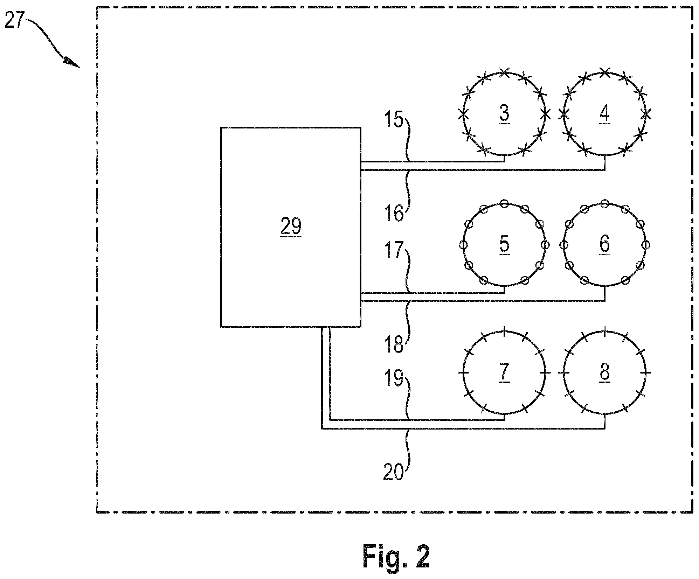

Die Kupplungsvorrichtung 1 für das landwirtschaftliches Fahrzeuggespann 2 ist beispielhaft in der Fig. 2 gezeigt. Die Kupplungsvorrichtung 1 weist mehrere Kupplungsdosen 3, 4, 5, 6, 7, 8 zum Anschluss von zugehörigen Schlauchkupplern 9, 10, 11, 12, 13, 14 auf, wobei die angeschlossenen Schlauchkuppler 9, 10, 11, 12, 13, 14 in der Fig. 3 dargestellt sind. Die Kupplungsdosen 3, 4, 5, 6, 7, 8 und die Schlauchkuppler 9, 10, 11, 12, 13, 14 sind jeweils elektrisch leitend ausgebildet. Jeder der Schlauchkuppler 9, 10, 11, 12, 13, 14 ist in der Fig. 3 mit einem der Schläuche 31, 32, 33, 34, 35 und 36 verbunden. Die Kupplungsdosen 3, 4, 5, 6, 7, 8 sind jeweils mit einer kuppeldosenseitigen elektrischen Leitung 15, 16, 17, 18, 19, 20 elektrisch leitend verbunden, wobei die kuppeldosenseitigen elektrischen Leitungen 15, 16, 17, 18, 19, 20 jeweils elektrisch leitend mit einer Arbeitsmaschinen-Steuervorrichtung 29 zur Steuerung und/oder Regelung der landwirtschaftlichen Arbeitsmaschine 27 verbunden sind. Die Schlauchkuppler 9, 10, 11, 12, 13, 14 sind jeweils mit einer schlauchkupplerseitigen elektrischen Leitung 21, 22, 23, 24, 25, 26 elektrisch leitend verbunden, wobei die schlauchkupplerseitigen elektrischen Leitungen 21, 22, 23, 24, 25, 26 jeweils elektrisch leitend mit einer Anbaugerät-Steuervorrichtung 30 zur Steuerung und/oder Regelung des Anbaugeräts 28 verbunden sind.

In der Fig. 3 sind mehrere Anschlusszustände dargestellt, wobei in einem Anschlusszustand, in dem der Schlauchkuppler 9 an der Kupplungsdose 3 angeschlossen ist, die kuppeldosenseitige elektrische Leitung 15 der Kupplungsdose 3, an dem der Schlauchkuppler 9 angeschossen ist, über diese Kupplungsdose 3 und diesen Schlauchkuppler 9 elektrisch leitend mit der schlauchkupplerseitigen elektrischen Leitung 21 verbunden ist. Analoges ist für die weiteren kuppeldosenseitigen elektrischen Leitungen 16, 17, 18, 19, 20 und schlauchkupplerseitigen elektrischen Leitungen 22, 23, 24, 25, 26 dargestellt. Mit anderen Worten ausgedrückt, ist die kuppeldosenseitige elektrische Leitung 16 elektrisch leitend mit der schlauchkupplerseitigen elektrischen Leitung 22 verbunden. Die kuppeldosenseitige elektrische Leitung 17 ist elektrisch leitend mit der schlauchkupplerseitigen elektrischen Leitung 23 verbunden. Die kuppeldosenseitige elektrische Leitung 18 ist elektrisch leitend mit der schlauchkupplerseitigen elektrischen Leitung 24 verbunden. Die kuppeldosenseitige elektrische Leitung 19 ist elektrisch leitend mit der schlauchkupplerseitigen elektrischen Leitung 25 verbunden. Die kuppeldosenseitige elektrische Leitung 20 ist elektrisch leitend mit der schlauchkupplerseitigen elektrischen Leitung 26 verbunden.

In diesen Anschlusszuständen, in denen jeweils einer Schlauchkuppler 9, 10, 11, 12, 13, 14 an einer der Kupplungsdosen 3, 4, 5, 6, 7, 8 angeschlossen ist, sind die Arbeitsmaschinen-Steuervorrichtung 29 und die Anbaugerät-Steuervorrichtung 30 mittels der Kupplungsvorrichtung 1 kommunizierend verbunden.

In der Fig. 2 ist ein Zustand gezeigt, in der die Schlauchkuppler 9, 10, 11, 12, 13, 14 noch nicht an den Kupplungsdosen 3, 4, 5, 6, 7, 8 angeschlossen sind.

Die Arbeitsmaschinen-Steuervorrichtung 29 kann beispielsweise die elektrische Spannung und/oder den elektrischen Widerstand und/oder den elektrischen Strom an jeder kuppeldosenseitigen elektrischen Leitung 15, 16, 17, 18, 19, 20 messen und/oder überwachen, sodass die Arbeitsmaschinen-Steuervorrichtung 29 den Moment eines Anschlusses, in dem wenigstens einer der Schlauchkuppler 9, 10, 11, 12, 13, 14 an einer der Kupplungsdosen 3, 4, 5, 6, 7, 8 angeschlossen wird, ermitteln und/oder feststellen kann. Die Arbeitsmaschinen-Steuervorrichtung 29 kann nach dieser Feststellung eines Anschlusses, in dem wenigstens einer der Schlauchkuppler 9, 10, 11, 12, 13, 14 an einer der Kupplungsdosen 3, 4, 5, 6, 7, 8 angeschlossen wurde, eine kommunizierende Verbindung, insbesondere eine Datenaustauschverbindung, über die wenigstens eine Kupplungsvorrichtung 1 mit der Anbaugerät-Steuervorrichtung 30 initiieren und/oder aufbauen.

Die Arbeitsmaschinen-Steuervorrichtung 29 und/oder die Anbaugerät-Steuervorrichtung 30 sind zur Ausführung einer Ermittlung einer Steckposition wenigstens eines der Schlauchkuppler 9, 10, 11, 12, 13, 14 der Kupplungsvorrichtung 1 ausgebildet und/oder programmiert. Hierfür ist die Anbaugerät-Steuervorrichtung 30 dazu ausgebildet und/oder programmiert, jeder schlauchkupplerseitigen elektrischen Leitung 21, 22, 23, 24, 25, 26 der Kupplungsvorrichtung 1 jeweils einen schlauchkupplerseitigen Identifikator zuzuordnen.

Die Arbeitsmaschinen-Steuervorrichtung 29 kann nach einer Initiierung und/oder einem Aufbau der kommunizierenden Verbindung den schlauchkupplerseitigen Identifikator über die kommunizierende Verbindung vom Anbaugerät-Steuervorrichtung 30 übermittelt bekommen und erhalten. Ausgehend vom Zustand der Fig. 2 wird nun beispielhaft ein Falschanschluss eines der Schlauchkuppler 9, 10, 11, 12, 13, 14 betrachtet. Die richtigen Anschlusspositionen sind in der Fig. 3 beispielhaft darstellt. Sollte beispielsweise ausgehend vom Zustand der Fig. 2 der Schlauchkuppler 9 an der Kupplungsdose 8 angeschlossen worden sein, dann liegt in diesem Beispiel ein fehlerhafter Anschluss des Anbaugerätes 28 vor. Beim Anschluss des Schlauchkuppler 9 übermittelt das Anbaugerät-Steuervorrichtung 30 den schlauchkupplerseitigen Identifikator des Schlauchkupplers 9 an die Arbeitsmaschinen-Steuervorrichtung 29. Die Arbeitsmaschinen-Steuervorrichtung 29 ist derart ausgebildet und/oder programmiert, dass sie basierend auf dem empfangenen schlauchkupplerseitigen Identifikator des Schlauchkupplers 9 ermitteln kann, ob die Steckposition des zum schlauchkupplerseitigen Identifikator dazugehörigen Schlauchkupplers 9 unzulässig ist.

In diesem Beispiel würde die Arbeitsmaschinen-Steuervorrichtung 29 feststellen, dass die Steckposition des zum schlauchkupplerseitigen Identifikator dazugehörigen Schlauchkupplers 9 unzulässig ist und daher ein Fehlermeldungsdatensatz ausbilden. Dieser Fehlermeldungsdatensatz kann beispielweise an ein nicht dargestelltes Anzeigemodul der landwirtschaftlichen Arbeitsmaschine 27 übermittelt werden, um diese Informationen einem Bediener der landwirtschaftliche Arbeitsmaschine 27 optisch darzustellen, sodass der Bediener den Schlauchkuppler 9 in einer richtigen Position, also an die Kupplungsdose 3, anschließt.

### Bezugszeichenliste

- 1: Kupplungsvorrichtung
- 2: landwirtschaftliches Fahrzeuggespann
- 3: Kupplungsdose
- 4: Kupplungsdose
- 5: Kupplungsdose
- 6: Kupplungsdose
- 7: Kupplungsdose
- 8: Kupplungsdose
- 9: Schlauchkuppler
- 10: Schlauchkuppler
- 11: Schlauchkuppler
- 12: Schlauchkuppler
- 13: Schlauchkuppler
- 14: Schlauchkuppler
- 15: kuppeldosenseitige elektrische Leitung
- 16: kuppeldosenseitige elektrische Leitung
- 17: kuppeldosenseitige elektrische Leitung
- 18: kuppeldosenseitige elektrische Leitung
- 19: kuppeldosenseitige elektrische Leitung
- 20: kuppeldosenseitige elektrische Leitung
- 21: schlauchkupplerseitige elektrische Leitung
- 22: schlauchkupplerseitige elektrische Leitung
- 23: schlauchkupplerseitige elektrische Leitung
- 24: schlauchkupplerseitige elektrische Leitung
- 25: schlauchkupplerseitige elektrische Leitung
- 26: schlauchkupplerseitige elektrische Leitung
- 27: landwirtschaftliche Arbeitsmaschine
- 28: Anbaugerät
- 29: Arbeitsmaschinen-Steuervorrichtung
- 30: Anbaugerät-Steuervorrichtung
- 31: Schlauch
- 32: Schlauch
- 33: Schlauch
- 34: Schlauch
- 35: Schlauch
- 36: Schlauch

## Patentansprüche

1. Kupplungsvorrichtung (1) für ein landwirtschaftliches Fahrzeuggespann (2),
- mit mehreren Kupplungsdosen (3, 4, 5, 6, 7, 8) zum Anschluss eines zugehörigen Schlauchkupplers (9, 10, 11, 12, 13, 14),
- mit wenigstens einem an den Kupplungsdosen (3, 4, 5, 6, 7, 8) anschließbaren Schlauchkuppler (9, 10, 11, 12, 13, 14),
- wobei die Kupplungsdosen (3, 4, 5, 6, 7, 8) und der wenigstens eine Schlauchkuppler (9, 10, 11, 12, 13, 14) jeweils elektrisch leitend ausgebildet sind,
**dadurch gekennzeichnet,**
- **dass** jede der Kupplungsdosen (3, 4, 5, 6, 7, 8) jeweils mit einer kuppeldosenseitigen elektrischen Leitung (15, 16, 17, 18, 19, 20) elektrisch leitend verbunden ist,
- wobei der wenigstens eine Schlauchkuppler (9, 10, 11, 12, 13, 14) mit einer schlauchkupplerseitigen elektrischen Leitung (21, 22, 23, 24, 25, 26) elektrisch leitend verbunden ist,
- wobei die kuppeldosenseitigen elektrischen Leitungen (15, 16, 17, 18, 19, 20) jeweils beabstandet von der schlauchkupplerseitigen elektrischen Leitung (21, 22, 23, 24, 25, 26) angeordnet sind,
- wobei in einem Anschlusszustand, in dem der wenigstens eine Schlauchkuppler (9, 10, 11, 12, 13, 14) an einer der Kupplungsdosen (3, 4, 5, 6, 7, 8) angeschlossen ist, die kuppeldosenseitige elektrische Leitung (15, 16, 17, 18, 19, 20) der Kupplungsdose (3, 4, 5, 6, 7, 8), an dem der Schlauchkuppler (9, 10, 11, 12, 13, 14) angeschossen ist, über die Kupplungsdose (3, 4, 5, 6, 7, 8) und den Schlauchkuppler (9, 10, 11, 12, 13, 14) elektrisch leitend mit der schlauchkupplerseitigen elektrischen Leitung (21, 22, 23, 24, 25, 26) verbunden ist.

2. Landwirtschaftliches Fahrzeuggespann (2)
- mit einer landwirtschaftlichen Arbeitsmaschine (27),
- mit einem Anbaugerät (28),
- mit wenigstens einer Kupplungsvorrichtung (1) nach Anspruch 1.

3. Landwirtschaftliches Fahrzeuggespann (2) nach Anspruch 2,
**dadurch gekennzeichnet,**
- **dass** die landwirtschaftliche Arbeitsmaschine (27) eine Arbeitsmaschinen-Steuervorrichtung (29) zur Steuerung und/oder Regelung der landwirtschaftlichen Arbeitsmaschine (27) aufweist,
- wobei das Anbaugerät (28) eine Anbaugerät-Steuervorrichtung (30) zur Steuerung und/oder Regelung des Anbaugeräts (28) aufweist,
- wobei die Arbeitsmaschinen-Steuervorrichtung (29) mit den kuppeldosenseitigen elektrischen Leitungen (15, 16, 17, 18, 19, 20) elektrisch leitend verbunden ist,
- wobei die Anbaugerät-Steuervorrichtung (30) mit wenigstens einer schlauchkupplerseitigen elektrischen Leitung (21, 22, 23, 24, 25, 26) elektrisch leitend verbunden ist.

4. Landwirtschaftliches Fahrzeuggespann (2) nach Anspruch 2 oder 3,
**dadurch gekennzeichnet,**
**dass** in einem Anschlusszustand, in dem der wenigstens eine Schlauchkuppler (9, 10, 11, 12, 13, 14) an einer der Kupplungsdosen (3, 4, 5, 6, 7, 8) angeschlossen ist, die Arbeitsmaschinen-Steuervorrichtung (29) und die Anbaugerät-Steuervorrichtung (30) mittels der wenigstens einen Kupplungsvorrichtung (1) kommunizierend verbunden sind.

5. Landwirtschaftliches Fahrzeuggespann (2) nach einem der Ansprüche 2 bis 4,
**dadurch gekennzeichnet,**
**dass** zwischen der Arbeitsmaschinen-Steuervorrichtung (29) und der Anbaugerät-Steuervorrichtung (30) mittels der wenigstens einen Kupplungsvorrichtung (1) eine Datenverbindung, insbesondere eine bidirektionale oder eine unidirektionale Datenverbindung, ausgebildet ist.

6. Landwirtschaftliches Fahrzeuggespann (2) nach Anspruch 5,
**dadurch gekennzeichnet,**
**dass** mittels der Datenverbindung über die wenigstens eine Kupplungsvorrichtung (1) elektrische Signale in analoger Form oder digitaler Form zwischen der Arbeitsmaschinen-Steuervorrichtung (29) und der Anbaugerät-Steuervorrichtung (30) übertragbar sind.

7. Landwirtschaftliches Fahrzeuggespann (2) nach einem der Ansprüche 2 bis 6,
**dadurch gekennzeichnet,**
- **dass** wenigstens ein Schlauch (31, 32, 33, 34, 35, 36) ausgebildet ist, der mit wenigstens einem Schlauchkuppler (9, 10, 11, 12, 13, 14) verbunden ist,
- wobei die schlauchkupplerseitige elektrischen Leitung (21, 22, 23, 24, 25, 26) wenigstens teilweise an dem Schlauch (31, 32, 33, 34, 35, 36) und/oder in dem Schlauch (31, 32, 33, 34, 35, 36) angeordnet ist.

8. Landwirtschaftliches Fahrzeuggespann (2) nach einem der Ansprüche 2 bis 7,
**dadurch gekennzeichnet,**
**dass** die Arbeitsmaschinen-Steuervorrichtung (29) und/oder die Anbaugerät-Steuervorrichtung (30) zur Ausführung einer Ermittlung einer Steckposition wenigstens eines Schlauchkupplers (9, 10, 11, 12, 13, 14) der Kupplungsvorrichtung (1) ausgebildet und/oder programmiert sind.

9. Landwirtschaftliches Fahrzeuggespann (2) nach einem der Ansprüche 2 bis 8,
**dadurch gekennzeichnet,**
- **dass** die Arbeitsmaschinen-Steuervorrichtung (29) dazu ausgebildet und/oder programmiert ist, jeder kuppeldosenseitigen elektrischen Leitung (15, 16, 17, 18, 19, 20) der Kupplungsvorrichtung (1) jeweils einen kuppeldosenseitigen Identifikator zuzuordnen, und/oder
- **dass** die Anbaugerät-Steuervorrichtung (30) dazu ausgebildet und/oder programmiert ist, jeder schlauchkupplerseitigen elektrischen Leitung (21, 22, 23, 24, 25, 26) der Kupplungsvorrichtung (1) jeweils einen schlauchkupplerseitigen Identifikator zuzuordnen.

10. Landwirtschaftliches Fahrzeuggespann (2) nach Anspruch 9,
**dadurch gekennzeichnet,**
**dass** die Arbeitsmaschinen-Steuervorrichtung (29) und die Anbaugerät-Steuervorrichtung (30) dazu ausgebildet und/oder programmiert sind, nach der Bewirkung eines Anschlusszustandes, in dem der wenigstens eine Schlauchkuppler (9, 10, 11, 12, 13, 14) an einer der Kupplungsdosen (3, 4, 5, 6, 7, 8) angeschlossen ist, den dazugehörigen kuppeldosenseitigen Identifikator und/oder den dazugehörigen schlauchkupplerseitigen Identifikator untereinander über die wenigstens eine Kupplungsvorrichtung (1) auszutauschen.

11. Landwirtschaftliches Fahrzeuggespann (2) nach Anspruch 10,
**dadurch gekennzeichnet,**
**dass** die Arbeitsmaschinen-Steuervorrichtung (29) dazu ausgebildet und/oder programmiert ist, basierend auf einem von der Anbaugerät-Steuervorrichtung (30) empfangenen schlauchkupplerseitigen Identifikator zu ermitteln, ob die Steckposition des zum schlauchkupplerseitigen Identifikator dazugehörigen Schlauchkupplers (9, 10, 11, 12, 13, 14) zulässig ist.

12. Landwirtschaftliches Fahrzeuggespann (2) nach Anspruch 11,
**dadurch gekennzeichnet,**
- **dass** die landwirtschaftliche Arbeitsmaschine (27) ein Anzeigemodul zur Anzeige von Informationen für einen Bediener der landwirtschaftliche Arbeitsmaschine (27) aufweist,
- wobei das Anzeigemodul kommunizierend mit der Arbeitsmaschinen-Steuervorrichtung (29) verbunden ist,
- wobei die Arbeitsmaschinen-Steuervorrichtung (29) dazu ausgebildet und/oder programmiert ist, eine Fehlermeldung an das Anzeigemodul zu übermitteln, wenn die Steckposition des zum schlauchkupplerseitigen Identifikator dazugehörigen Schlauchkupplers nicht zulässig ist,
- wobei das Anzeigemodul dazu ausgebildet und/oder programmiert ist, eine von der Arbeitsmaschinen-Steuervorrichtung (29) empfangene Fehlermeldung optisch für den Bediener der landwirtschaftliche Arbeitsmaschine (27) darzustellen.

13. Landwirtschaftliche Arbeitsmaschine (27) des landwirtschaftlichen Fahrzeuggespanns (2) nach einem der Ansprüche 2 bis 12.

14. Anbaugerät (28) des landwirtschaftlichen Fahrzeuggespanns (2) nach einem der Ansprüche 2 bis 12.

15. Verfahren zum Betrieb eines landwirtschaftlichen Fahrzeuggespanns (2) nach einem der Ansprüche 2 bis 12, wobei zwischen der landwirtschaftlichen Arbeitsmaschine (27) und dem Anbaugerät (28) über die wenigstens eine Kupplungsvorrichtung (1) ein Datenaustausch erfolgt.
